# FASCICULE DE BREVET EUROPEEN

(11) **EP 0 936 121 B1**
(45) Date de publication et mention de la délivrance du brevet: **03.09.2003**
(21) Numéro de dépôt: 99400299.6
(22) Date de dépôt: 09.02.1999
(51) Int. Cl.: B61D 33/00, B64D 11/06, B60N 2/06

(54) **Banquette deux places de seconde classe modulable en banquette une place de première classe et inversement et procédé de transformation d'une telle banquette**
Zweisitzige Bank der zweiten Klasse, die in eine einsitzige Bank der ersten Klasse umwandelbar ist, und umgekehrt und Verfahren zur Umwandlung solch einer Bank
Second class, two-seat bench changeable into a first class, single seat bench and vice versa and method of changing such a bench

(30) Priorité: 12.02.1998 FR 9801679
(43) Date de publication de la demande: 18.08.1999
(73) Titulaire: Alstom Transport S.A., 75116 Paris (FR)
(72) Inventeur: Durand, François, 17300 Rochefort (FR); Guinot, Alain, 17290 Thaire (FR)
(74) Mandataire: Moncheny, Michel

(56) Documents cités:
- DE-A- 4 337 941

## Description

La présente invention concerne les sièges de première et de seconde classe notamment des véhicules de transport de passagers, en général, et porte, plus particulièrement, sur une banquette deux places de seconde classe modulable en banquette une place de première classe et inversement, ainsi que sur un procédé de transformation d'une telle banquette.

La seule solution actuellement pour changer un siège de première classe en siège de seconde classe et inversement un siège de seconde classe en siège de première classe, notamment d'une salle d'un véhicule de transport de passagers, est de remplacer les sièges.

Dans la salle d'un véhicule ferroviaire ou routier de transport de passagers, il n'est donc possible de changer la catégorie de la salle qu'en remplaçant les sièges.

On connaît de DE-A1-43 37 941 une banquette transformable selon le préambule de la revendication 1 et un procédé de transformation d'une banquette selon le préambule de la revendication 11.

L'invention a pour but de foumir une autre banquette N places (N : nombre entier) de seconde classe modulable en banquette N-1 place(s) de première classe et inversement, aussi bien pour N = 2 que pour N > 2, et de fournir un autre procédé de transformation qui permette, sans dépose de sièges, de transformer une salle d'une classe donnée en une salle d'une autre classe.

Conformément à l'invention, la banquette deux places de seconde classe modulable en banquette une place de première classe et inversement et le procédé de transformation d'une telle banquette sont tels que précisés dans les revendications 1 et 11 et, avantageusement, dans les revendications qui en dépendent.

Un avantage de la banquette deux places de seconde classe modulable en banquette une place de première classe et inversement et du procédé de transformation d'une telle banquette de l'invention est que la durée de transformation d'une salle d'une classe donnée en une salle d'une autre classe est très courte et permet d'augmenter ponctuellement la capacité du train.

Un autre avantage de la banquette deux places de seconde classe modulable en banquette une place de première classe et inversement et du procédé de transformation d'une telle banquette de l'invention est d'offrir pour un exploitant le double de places dans les remorques initialement prévues uniquement en première classe, ceci permettant de palier aux problèmes de variations de charge entre week-end et semaine par exemple.

Un autre avantage de la banquette deux places de seconde classe modulable en banquette une place de première classe et inversement et du procédé de transformation d'une telle banquette de l'invention est d'optimiser le nombre de places proposé sur des trains non évolutifs en terme de nombre de remorques.

D'autres buts, caractéristiques et avantages de l'invention apparaîtront à la lecture de la description de deux modes de réalisation préférés d'une banquette deux places de seconde classe modulable en banquette une place de première classe et inversement et de la description du procédé de transformation d'une telle banquette, description faite en liaison avec les dessins dans lesquels :
- la figure lA est une vue générale d'une banquette deux places de seconde classe modulable en banquette une place de première classe et inversement conforme à l'invention, la banquette étant modulée pour constituer une banquette deux places de seconde classe,

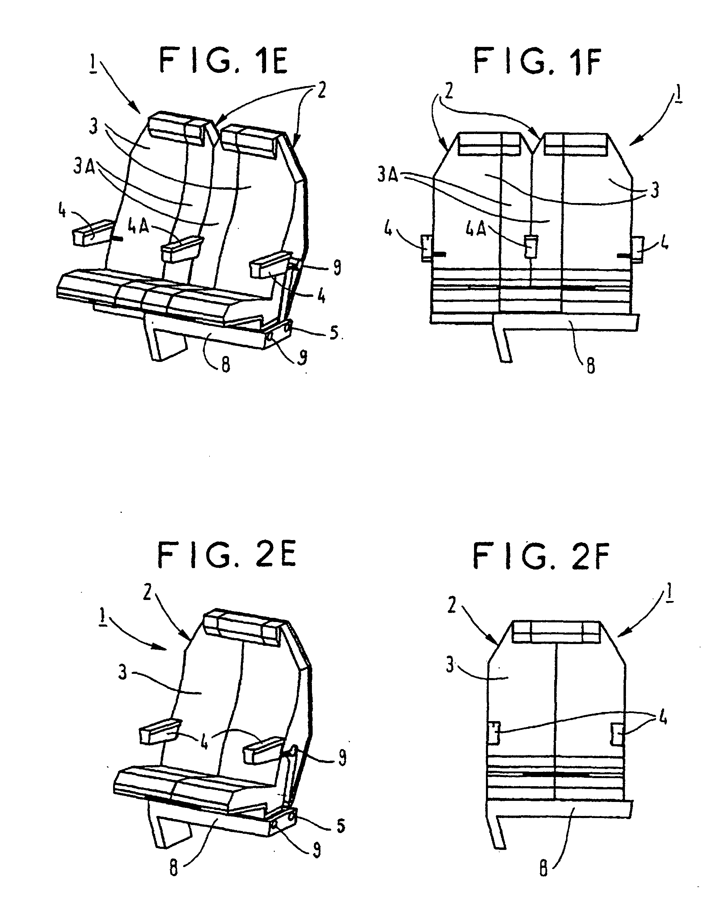

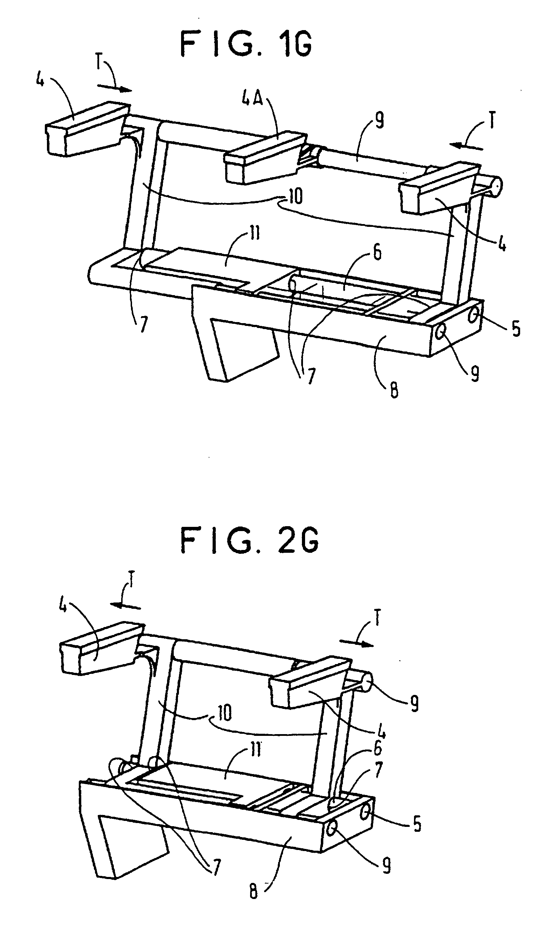

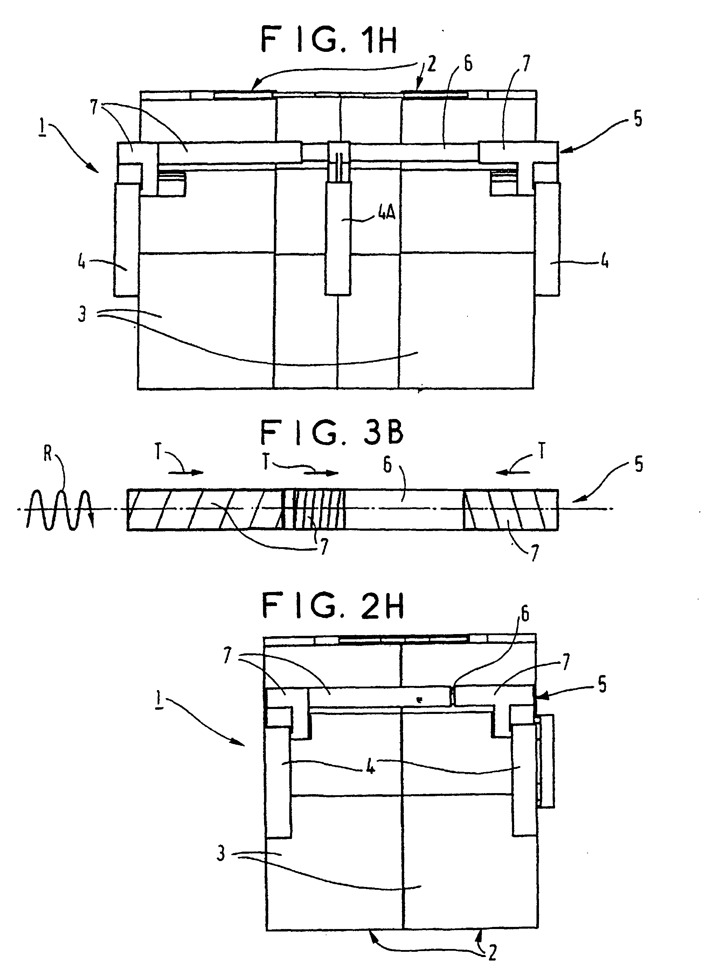

- la figure 2A est une vue générale d'une banquette deux places de seconde classe modulable en banquette une place de première classe et inversement conforme à l'invention, la banquette étant modulée pour constituer une banquette une place de première classe,
- la figure 1B est une vue de face de la banquette deux places de seconde classe modulable en banquette une place de première classe et inversement conforme à l'invention représentée à la figure 1A dans laquelle la banquette est modulée pour constituer une banquette deux places de seconde classe,
- la figure 2B est une vue générale de la banquette deux places de seconde classe modulable en banquette une place de première classe et inversement conforme à l'invention représentée à la figure 2A dans laquelle la banquette est modulée pour constituer une banquette une place de première classe,

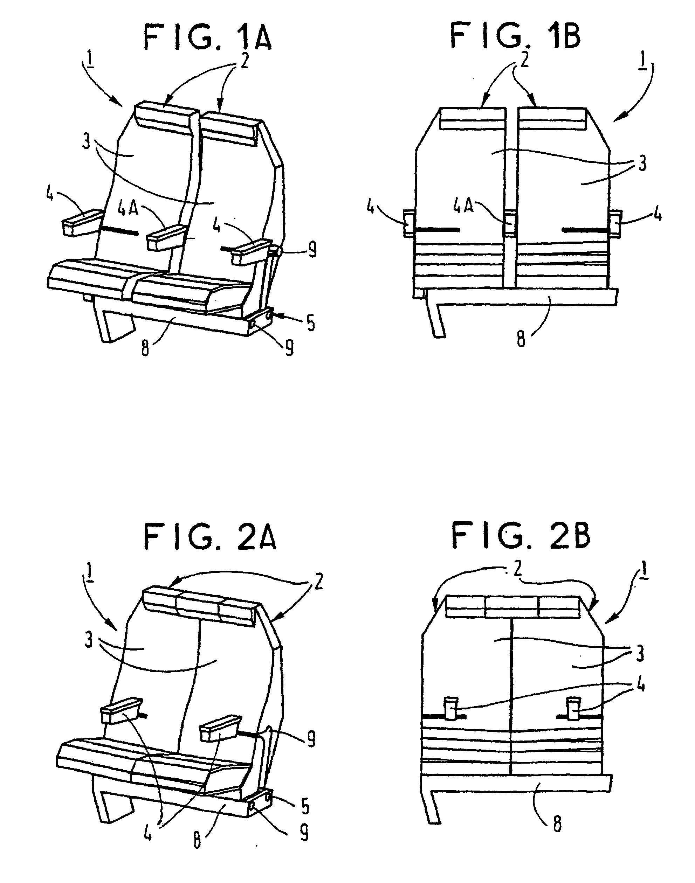

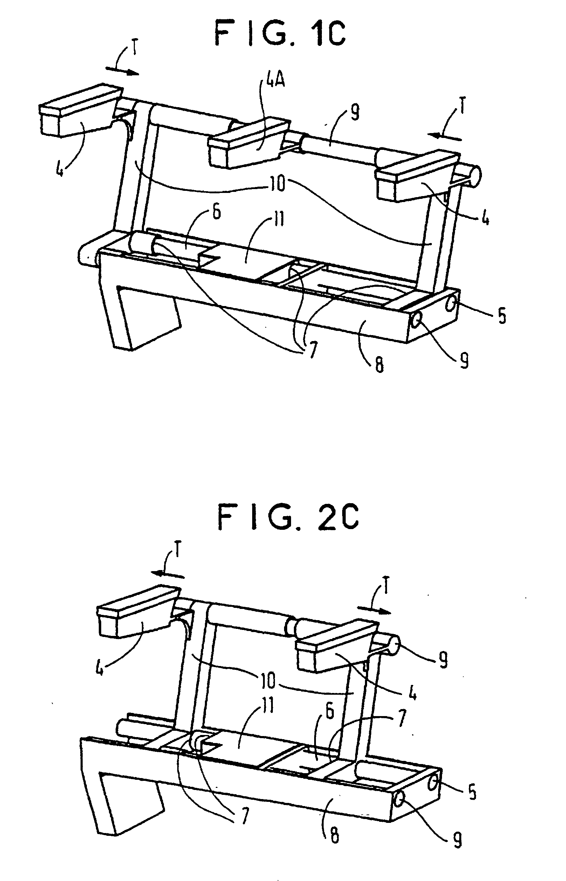

- la figure 1C est une vue générale du châssis de la banquette deux places de seconde classe modulable en banquette une place de première classe et inversement conforme à l'invention représentée à la figure 1A dans laquelle la banquette est modulée pour constituer une banquette deux places de seconde classe,
- la figure 2C est une vue générale du châssis de la banquette deux places de seconde classe modulable en banquette une place de première classe et inversement conforme à l'invention représentée à la figure 2A dans laquelle la banquette est modulée pour constituer une banquette une place de première classe,

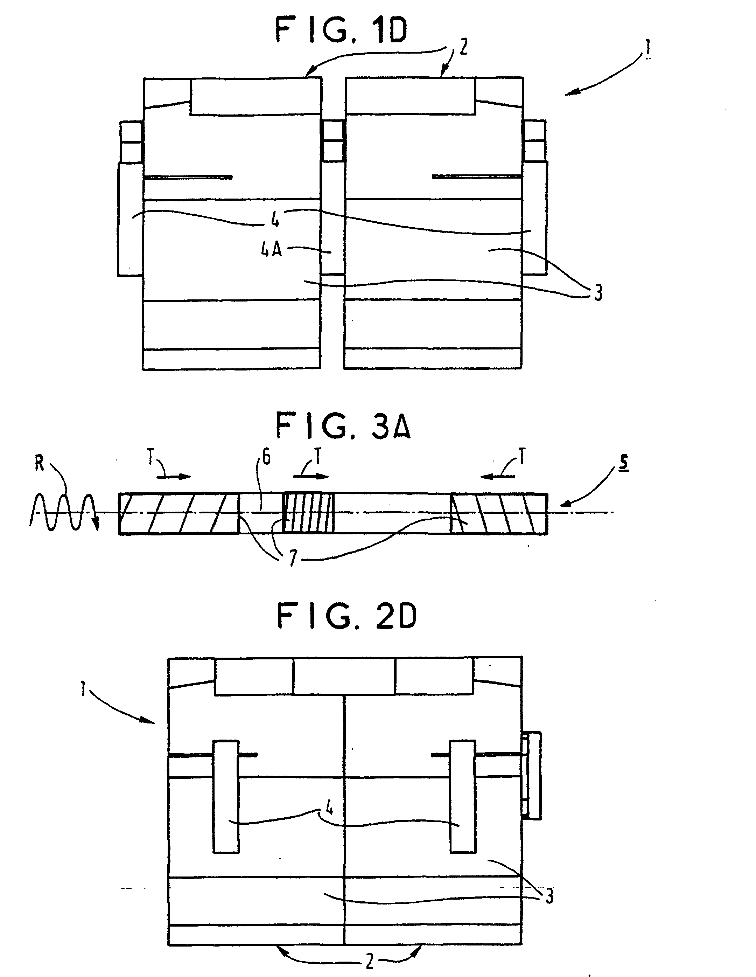

- la figure 1D représente une vue de dessus de la banquette deux places de seconde classe modulable en banquette une place de première classe et inversement conforme à l'invention représentée à la figure 1A dans laquelle la banquette est modulée pour constituer une banquette deux places de seconde classe,
- la figure 2D représente une vue de dessus de la banquette deux places de seconde classe modulable en banquette une place de première classe et inversement conforme à l'invention représentée à la figure 2A dans laquelle la banquette est modulée pour constituer une banquette une place de première classe,
- la figure 3A représente les moyens de translation des accoudoirs et des assises de la banquette deux places de seconde classe modulable en banquette une place de première classe et inversement conforme à l'invention,
- les figures 1E, 2E, 1F, 2F, 1G, 2G, 1H, 2H, et 3B sont des vues du même type que les vues précédentes et représentent le second mode de réalisation préféré de la banquette deux places de seconde classe modulable en banquette une place de première classe et inversement conforme à l'invention.

La présente invention consiste à conserver les sièges constituant la banquette deux places de seconde classe modulable en banquette une place de première classe et inversement présentant un nombre donné de places et à modifier la position de certains de ces sièges de manière à faire évoluer en largeur la banquette.

La banquette deux places de seconde classe de l'invention se transforme en banquette à une place de première classe en écartant les assises et les accoudoirs de la banquette deux places de seconde classe.

La banquette une place de première classe de l'invention se transforme en banquette deux places de seconde classe en resserrant les assises et les accoudoirs de la banquette une place de première classe.

La banquette 1 deux places de seconde classe est susceptible d'être transformée en banquette une place de première classe et inversement.

La banquette 1 deux places de seconde classe modulable en banquette une place de première classe comporte deux sièges 2 à deux assises 3 et crois accoudoirs 4, 4A.

L'accoudoir central 4A disposé entre chaque siège 2 est déposé, lorsque la banquette deux places de seconde classe est transformée en banquette une place de première classe, puis est remis en place, lorsque la banquette une place de première classe est transformée en banquette deux places de seconde classe.

La banquette 1 deux places de seconde classe modulable en banquette une place de première classe comporte des moyens de translation 5 d'au moins une des deux assises 3 et d'au moins un des deux accoudoirs 4.

Les deux assises 3 et les deux accoudoirs 4 restent alignés les uns par rapport aux autres après translation.

Les figures 1E, 2E, 1F, 2F, 1G, 2G, 1H, 2H et 3B sont des vues du même type que les vues précédentes et représentent le second mode de réalisation préféré de la banquette deux places de seconde classe modulable en banquette une place de première classe et inversement conforme à l'invention.

La banquette 1 deux places de seconde classe modulable en banquette une place de première classe comporte deux sièges 2 à deux assises 3 et trois accoudoirs 4, 4A.

Les deux assises 3 sont au moins partiellement démontables et comportent donc des assises partielles démontables 3A.

Ces assises partielles démontables 3A sont, de préférence, disposées en partie centrale de la banquette deux places de seconde classe modulable en banquette une place de première classe.

Un autre mode de réalisation non représenté consiste à disposer ces assises partielles démontables en extrémité de banquette deux places de seconde classe modulable en banquette une place de première classe.

Les assises partielles démontables 3A sont déposées de la banquette, lorsque la banquette deux places de seconde classe est transformée en banquette une place de première classe, puis remis en place, lorsque la banquette une place de première classe est transformée en banquette deux places de seconde classe.

L'accoudoir central 4A disposé entre chaque siège 2 est supprimé, lorsque la banquette deux places de seconde classe est transformée en banquette une place de première classe, puis est remis en place, lorsque la banquette une place de première classe est transformée en banquette deux places de seconde classe.

Les figures 3A et 3B représentent les moyens de translation des accoudoirs et des assises de la banquette deux places de seconde classe modulable en banquette une place de première classe et inversement conforme à l'invention.

Dans les deux modes de réalisation préféré, les translations T des assises et des accoudoirs sont obtenues au moyen des moyens de translation 5 de manière à resserrer les assises à translater et les accoudoirs à translater les uns contre les autres, lorsque la banquette deux places de seconde classe est transformée en banquette une place de première classe, ou à écarter les assises à translater et les accoudoirs à translater les uns des autres, lorsque la banquette une place de première classe est transformée en banquette deux places de seconde classe:

La banquette est, par exemple, telle que lors de la transformation au moins une assise 3 est fixe, par exemple l'assise de l'une des extrémités.

Les moyens de translation 5 des assises 3 à translater et des accoudoirs 4 à translater se composent d'un arbre de translation 6 susceptible d'être mû en rotation R et comportant un élément de translation 7 associé à chaque accoudoir 4 à translater et à chaque assise 3 à translater.

Conformément aux modes de réalisation préférés, les éléments de translation 7 des accoudoirs 4 et des assises 3 à translater se composent de vis à pas variable dont le pas de vis et la longueur de la zone active comportant le pas de vis augmente avec l'éloignement des accoudoirs 4 à translater et des assises 3 à translater par rapport aux accoudoirs 4 et aux assises 3 fixes.

Les pas de vis des éléments de translation 7 sont soit à gauche sur certains de ces éléments de translation 7, soit à droite pour les autres éléments de translation 7 et sont fonction de la transformation T à effectuer.

La banquette selon l'invention comprend un châssis 8 supportant l'arbre de translation 6 et au moins un arbre de guidage 9 des accoudoirs 4 à translater et des assises 3 à translater.

L'arbre de translation 6 et les arbres de guidage 9 supportent des supports d'accoudoirs 10 mobiles en translation et des supports d'assises 11 mobiles en translation.

Les supports mobiles d'accoudoirs 10 à translater sont translatés au moyen des éléments de translation 7 associés à chaque accoudoir à translater.

De même, les supports mobiles d'assises 11 à translater sont translatés au moyen des éléments de translation 7 associés à chaque assise à translater.

L'accoudoir central 4A disposé entre chaque siège 2 est supprimé lorsque la banquette deux places de seconde classe est transformée en banquette une place de première classe.

Cet accoudoir central 4A peut alors être réutilisé, par exemple sur une banquette deux places modulable première-seconde classe lorsque la banquette est agencée en banquette deux places première classe et nécessite donc deux accoudoirs par place.

Les accoudoirs et les assises étant, par exemple, montés sur coulisseaux de manière à permettre leur translation et déplacement relatif, le mouvement de translation peut être soit motorisé, soit manuel.

Différents systèmes peuvent être utilisés pour translater les accoudoirs et les assises à translater, il est par exemple possible d'utiliser des vis à pas variable, des tringles (non représentées) ou un jeu de cames (non représentées).

A titre d'exemple, les différentes translations sont obtenues par translation manuelle des accoudoirs et des assises à translater au moyen de guide sans filetage.

Des butées fixent les positions extrêmes des différents éléments, le verrouillage de l'ensemble, assuré par exemple par un système à gâche ou à cliquet, permettant d'éviter tout mouvement après manoeuvre.

La présente invention porte également sur un procédé de transformation d'une banquette deux places de seconde classe modulable en banquette une place de première classe et inversement.

Le procédé selon l'invention comporte des étapes permettant :
- de transformer la banquette 1 deux places de seconde classe en banquette une place de première classe,
- de supprimer l'accoudoir central 4A entre chaque siège 2, lorsque la banquette deux places de seconde classe est transformée en banquette une place de première classe, ou d'introduire l'accoudoir central 4A entre chaque siège 2, lorsque la banquette une place de première classe est transformée en banquette deux places de seconde classe, et
- de translater au moins une des deux assises 3 et au moins un des deux accoudoirs 4, au moyen de moyens de translation 5 incorporés dans la banquette 1 deux places de seconde classe modulable en banquette une place de première classe, les deux assises 3 et les deux accoudoirs 4 restant alignés les uns par rapport aux autres.

Le procédé selon l'invention peut comporter une étape consistant en ce qu'une assise partielle démontable 3A soit déposée de la banquette, lorsque la banquette deux places de seconde classe est transformée en banquette une place de première classe, puis soit remis en place, lorsque la banquette une place de première classe est transformée en banquette deux places de seconde classe.

Le procédé de transformation d'une banquette comporte une étape consistant à mouvoir en rotation R l'arbre de translation 6 incorporé dans les moyens de translation 5 des assises 3 à translater et des accoudoirs 4 à translater, au moyen d'éléments de translation 7 associés à chaque accoudoir 4 à translater et à chaque assise 3 à translater.

Le procédé de transformation de la banquette comporte une étape consistant à translater des supports mobiles d'accoudoirs 10 à translater, au moyen des éléments de translation 7 associés à chaque accoudoir à translater, et à translater des supports mobiles d'assises 11 à translater, au moyen desdits éléments de translation 7 associés à chaque assise à translater.

Il est clair, compte tenu de ce qui précède, que la banquette deux places de seconde classe modulable en banquette une place de première classe et que le procédé de transformation de cette banquette peuvent être généralisés en une banquette N (N nombre entier) places de seconde classe modulable en banquette N-1 place de première classe et en un procédé de transformation de cette banquette.

En particulier, il peut être réalisé une banquette trois places de seconde classe modulable en banquette deux places de première classe et un procédé de transformation de cette banquette.

## Revendications

1. Banquette (1) N (N : nombre entier) places de seconde classe modulable en banquette N-1 place(s) de première classe et inversement, ladite banquette N places de seconde classe comportant N sièges (2) à N assises (3) et N+1 accoudoirs (4), ladite banquette (1) comportant des moyens de translation (5) d'au moins une desdites assises (3) et d'au moins un desdits N+1 accoudoirs (4), lesdites assises (3) et lesdits accoudoirs (4) restant alignés les uns par rapport aux autres, des translations T des assises et des accoudoirs étant obtenues au moyen desdits moyens de translation (5) permettant de resserrer lesdites assises à translater les unes contre les autres et lesdits accoudoirs à translater, lorsque ladite banquette N places de seconde classe est transformée en banquette de N-1 place(s) de première classe, ou d'écarter lesdites assises à translater et lesdits accoudoirs à translater les uns des autres, lorsque ladite banquette N-1 place(s) de première classe est transformée en banquette N places de seconde classe, **caractérisée en ce qu'**un accoudoir intermédiaire (4A) est présent entre deux sièges (2), lorsque ladite banquette N-1 place(s) de première classe est transformée en banquette N places de seconde classe, et est susceptible d'être retiré entre deux sièges (2), lorsque ladite banquette N places de seconde classe est transformée en banquette N-1 place(s) de première classe.

2. Banquette selon la revendication 1, dans laquelle les N assises (3) sont au moins partiellement démontables de manière à comporter au moins deux assises partielles démontables (3A).

3. Banquette selon la revendication 2, dans laquelle les assises partielles démontables (3A) sont disposées en partie centrale de la banquette N places de seconde classe modulable en banquette N-1 place(s) de première classe.

4. Banquette selon la revendication 2, dans laquelle les assises partielles démontables (3A) sont disposées en extrémité de banquette N places de seconde classe modulable en banquette N-1 place(s) de première classe.

5. Banquette selon l'une quelconque des revendications 1 à 4, dans laquelle au moins une assise (3) est fixe.

6. Banquette selon l'une quelconque des revendications 1 à 5, dans laquelle lesdits moyens de translation (5) desdites assises (3) à translater et desdits accoudoirs (4) à translater se composent d'un arbre de translation (6) susceptible d'être mû en rotation R et comportant un élément de translation (7) associé à chaque accoudoir (3) à translater et à chaque assise (4) à translater.

7. Banquette selon l'une quelconque des revendications 1 à 6, dans laquelle lesdits éléments de translation (7) desdits accoudoirs (3) et desdites assises (4) à translater se composent de vis à pas variable dont le pas de vis et la longueur de la zone active comportant ledit pas de vis augmente avec l'éloignement desdits accoudoirs (3) à translater et desdites assises (4) à translater par rapport auxdits accoudoirs (3) et auxdites assises (4) fixes.

8. Banquette selon l'une quelconque des revendications 1 à 7, comprenant un châssis (8) supportant ledit arbre de translation (6) et au moins un arbre de guidage (9) desdits accoudoirs (3) à translater et desdites assises (4) à translater, ledit arbre de translation (6) et lesdits arbres de guidage (9) supportant des supports d'accoudoirs (10) mobiles en translation et des supports d'assises (11) mobiles en translation, lesdits supports mobiles d'accoudoirs (10) à translater étant translatés au moyen desdits éléments de translation (7) associés à chaque accoudoir à translater et lesdits supports mobiles d'assises (11) à translater étant translatés au moyen desdits éléments de translation (7) associés à chaque assise à translater.

9. Banquette selon l'une quelconque des revendications 1 à 8, dans laquelle les pas de vis desdits éléments de translation (7) sont soit à gauche sur certains de ces éléments de translation (7), soit à droite pour les autres éléments de translation (7) et sont fonction de la translation T à effectuer.

10. Banquette selon l'une quelconque des revendications 1 à 9, **caractérisée en ce que** N est égal à 2.

11. Procédé de transformation d'une banquette (1) N places de seconde classe modulable en banquette N-1 place(s) de première classe et inversement, ladite banquette N places de seconde classe comportant N sièges (2) à N assises (3) et N+1 accoudoirs (4, 4A), ledit procédé comportant des étapes permettant :
- de transformer ladite banquette (1) N places de seconde classe modulable en banquette N-1 place(s) de première classe et inversement,
- de translater au moins une des deux assises (3) et au moins un des accoudoirs (4), au moyen de moyens de translation (5) incorporés dans la banquette (1) N places de seconde classe modulable en banquette N-1 place(s) de première classe, les assises (3) et les accoudoirs (4) restant alignés les uns par rapport aux autres,
**caractérisé en ce que** le procédé comprend une étape permettant de supprimer un accoudoir intermédiaire (4A) entre deux siège(s) (2), lorsque la banquette N places de seconde classe est transformée en banquette N-1 place(s) de première classe, ou d'introduire un accoudoir intermédiaire (4A) entre deux sièges (2), lorsque la banquette N-1 place(s) de première classe est transformée en banquette N places de seconde classe.

12. Procédé selon la revendication 11, comportant une étape consistant en ce qu'au moins une assise partielle démontable (3A) soit déposée de la banquette, lorsque la banquette N places de seconde classe est transformée en banquette N-1 place(s) de première classe, puis soit remis en place, lorsque la banquette N-1 place(s) de première classe est transformée en banquette N places de seconde classe.

13. Procédé selon l'une quelconque des revendications 11 ou 12, comportant une étape consistant à mouvoir en rotation R un arbre de translation (6) incorporé dans lesdits moyens de translation (5) desdites assises (3) à translater et desdits accoudoirs (4) à translater, au moyen d'éléments de translation (7) associés à chaque accoudoir (3) à translater et à chaque assise (4) à translater.

14. Procédé selon l'une quelconque des revendications 11 à 13, comportant une étape consistant à translater des supports mobiles d'accoudoirs (10) à translater, au moyen desdits éléments de translation (7) associés à chaque accoudoir à translater, et à translater des supports mobiles d'assises (11) à translater, au moyen desdits éléments de translation (7) associés à chaque assise à translater.

15. Procédé selon l'une quelconque des revendications 11 à 14, **caractérisé en ce que** N est égal à 2.

## Patentansprüche

1. Bank (1) mit N (N: ganze Zahl) Zweite-Klasse-Plätzen, welche in eine Bank mit N-1 Erste-Klasse-Plätzen und umgekehrt variierbar ist, wobei die Bank mit N Zweite-Klasse-Plätzen N Sitzplätze (2) zu N Sitzen (3) und N+1 Armlehnen (4) aufweist, wobei die Bank (1) Translationsmittel (5) von mindestens einem der Sitze (3) und mindestens einer der N+1 Armlehnen (4) aufweist, wobei die Sitze (3) und die Armlehnen (4) zueinander in einer Linie ausgerichtet bleiben, wobei die Translationen T der Sitze und der Armlehnen mittels der Translationsmittel (5) erzielt werden, welche es erlauben, die Verschiebe-Sitze aufeinander zuzubewegen und die Verschiebe-Armlehnen aufeinander zuzubewegen, wenn die Bank mit N Zweite-Klasse-Plätzen in eine Bank mit N-1 Erste-Klasse-Platz/Plätzen transformiert wird, oder die Verschiebe-Sitze und die Verschiebe-Armlehnen voneinander wegzubewegen, wenn die Bank (1) mit N-1 Erste-Klasse-Platz/Plätzen in eine Bank mit N Zweite-Klasse-Plätzen transformiert wird, **dadurch gekennzeichnet, dass** eine Mitten-Armlehne (4A) zwischen zwei Sitzplätzen (2) vorhanden ist, wenn der/die N-1 Erste-Klasse-Platz/Plätze in eine Bank mit N Zweite-Klasse-Plätze transformiert wird, und geeignet ist, zwischen zwei Sitzplätzen (2) zurückgezogen zu werden, wenn die Bank mit N Zweite-Klasse-Plätzen in eine Bank mit N-1 Erste-Klasse-Platz/Plätzen transformiert wird.

2. Bank nach Anspruch 1, in welcher die N Sitze (3) mindestens teilweise demontierbar sind, so dass sie wenigstens zwei demontierbare Teilsitze (3A) aufweisen.

3. Bank nach Anspruch 2, in welcher die demontierbaren Teilsitze (3A) in einem Zentralabschnitt der Bank mit N Zweite-Klasse-Plätzen angeordnet sind, welche in-eine Bank mit N-1 Erste-Klasse-Platz/Plätzen variierbar ist.

4. Bank nach Anspruch 2, in welcher die demontierbaren Teilsitze (3A) an den Außenseiten der Bank mit N Zweite-Klasse-Plätzen angeordnet sind, welche in eine Bank mit N-1 Erste-Klasse-Platz/Plätze variierbar ist.

5. Bank nach einem der Ansprüche 1 bis 4, in welcher mindestens ein Sitz (3) fest ist.

6. Bank nach einem der Ansprüche 1 bis 5, in welcher die Translationsmittel (5) der Verschiebe-Sitze (3) und der Verschiebe-Armlehnen (4) eine Translationswelle (6) aufweisen, welche geeignet ist, in Rotation R versetzt zu werden, und ein Translationselement (7) aufweist, welches zu jeder Verschiebe-Armlehne (3) und jedem Verschiebe-Sitz (4) zugehörig ist.

7. Bank nach einem der Ansprüche 1 bis 6, in welcher die Translationselemente (7) der Verschiebe-Armlehnen (3) und der Verschiebe-Sitze (4) sich aus einer Schraube mit variabler Steigung zusammensetzen, deren Schraubensteigung und die Länge der aktiven Zone, welche die Schraubensteigung aufweist, sich mit der Entfernung der Verschiebe-Armlehnen (3) und der Verschiebe-Sitze (4) bezüglich der festen Armlehnen und der Sitze vergrößert.

8. Bank nach einem der Ansprüche 1 bis 7, welche ein Gestell (8) aufweist, welches die Translationswelle (6) und mindestens eine Führungsachse (9) der Verschiebe-Armlehnen (3) und der Verschiebe-Sitze (4) stützt, wobei die Translationswelle (6) und die Führungsachsen (9) verschiebbare, mobile Armlehnenstützen (10) und verschiebbare, mobile Sitzstützen (11) stützt, wobei die verschiebbaren, mobilen Armlehnen-Stützen (10) mittels der Translationselemente (7) verschoben werden, welche zu jeder Verschiebe-Armlehne zugehörig sind; und die verschiebbaren, mobilen Sitzstützen (11) mittels der Translationselemente (7) verschoben werden, welche zu jedem Verschiebe-Sitz zugehörig sind.

9. Bank nach einem der Ansprüche 1 bis 8, in welcher die Schraubensteigungen der Translationselemente (7) entweder linksgängig auf gewissen Translationselementen (7) oder rechtsgängig für die anderen Translationselemente (7) sind und eine Funktion der zu bewirkenden Translation T sind.

10. Bank nach einem der Ansprüche 1 bis 9, **dadurch gekennzeichnet, dass** N gleich 2 ist.

11. Verfahren zur Transformation einer Bank (1) mit N Zweite-Klasse-Plätzen, welche variierbar ist in eine Bank mit N-1 Erste-Klasse-Platz/Plätzen und umgekehrt, wobei die Bank mit N Zweite-Klasse-Plätzen N Sitzplätze (2) zu N Sitzen (3) und N+1 Armlehnen (4, 4A) aufweist, wobei das Verfahren Schritte aufweist, welche erlauben:
- die Bank (1) mit N Zweite-Klasse-Plätzen, welche in eine Bank mit N-1 Erste-Klasse-Platz/Plätzen variierbar ist, zu transformieren,
- mindestens einen der zwei Sitze (3) und mindestens eine der Armlehnen (4) mittels Translationsmitteln (5) zu verschieben, welche in der Bank (1) mit N Zweite-Klasse-Plätzen eingebaut sind, welche in eine Bank mit N-1 Erste-Klasse-Platz/Plätzen variierbar ist, wobei die Sitze (3) und die Armlehnen (4) zueinander in einer Linie ausgerichtet verbleiben,
**dadurch gekennzeichnet, dass** das Verfahren einen Schritt aufweist, welcher erlaubt, eine Mitten-Armlehne (4A) zwischen zwei Sitzplätzen (2) verschwinden zu lassen, wenn die Bank mit N Zweite-Klasse-Plätzen in eine Bank mit N-1 Erste-Klasse-Platz/Plätzen transformiert wird, oder eine Mitten-Armlehne (4A) zwischen zwei Sitzplätze (2) einfügt, wenn die Bank mit N-1 Erste-Klasse-Platz/Plätzen in eine Bank mit N Zweite-Klasse-Plätzen transformiert wird.

12. Verfahren nach Anspruch 11, welches einen Schritt aufweist, welcher darin besteht, dass mindestens ein demontierbarer Teilsitz (3A) von der Bank abgesondert wird, wenn die Bank mit N Zweite-Klasse-Plätzen in eine Bank mit N-1 Erste-Klasse-Platz/Plätzen transformiert wird, dann an die Stelle wieder eingesetzt wird, wenn die Bank mit N-1 Erste-Klasse-Platz/Plätzen in eine Bank mit N Zweite-Klasse-Plätzen transformiert wird.

13. Verfahren nach einem der Ansprüche 11 oder 12, welches einen Schritt aufweist, welcher darin besteht, eine Translationswelle (6), welche in die Translationsmittel (5) der Verschiebe-Sitze (3) und der Verschiebe-Armlehnen (4) eingebaut ist, in Rotation R zu versetzen mittels Translationselementen (7), welche jeder Verschiebe-Armlehne (3) und jedem Verschiebe-Sitz (4) zugehörig sind.

14. Verfahren nach einem der Ansprüche 11 bis 13, welches einen Schritt aufweist, welcher darin besteht, verschiebbare, mobile Armlehnen-Stützen (10) zu verschieben mittels der Translationselemente (7), welche zu jeder Verschiebe-Armlehne zugehörig sind, und verschiebbare, mobile Sitzstützen (11) zu verschieben mittels der Translationselemente (7), welche zu jedem Verschiebe-Sitz zugehörig sind.

15. Verfahren nach einem der Ansprüche 11 bis 14, **dadurch gekennzeichnet, dass** N gleich 2 ist.

## Claims

1. Second-class N-seater seat (1) (where N is a whole number) that can be converted into a first-class N-1-seater seat, and vice versa, the said second-class N-seater seat comprising N seats (2) with N seat. cushions (3) and N+1 armrests (4), the said seat (1) comprising means (5) of translating at least one of the said seat cushions (3) and at least one of the said N+1 armrests (4), the said seat cushions (3) and the said armrests (4) remaining mutually aligned, translations T of the seat cushions and of the armrests being obtained by means of the said translation means (5), allowing the said seat cushions that are to be translated and the said armrests that are to be translated to be brought closer together when the said second-class N-seater seat is converted into a first-class N-1-seater seat, or the said seat cushions that are to be translated and the said armrests that are to be translated to be moved further apart when the said first-class N-1-seater seat is converted into a second-class N-seater seat, **characterized in that** an intermediate armrest (4A) is present between two seats (2) when the said first-class N-1-seater seat is converted into a second-class N-seater seat, and can be removed from between two seats (2) when the said second-class N-seater seat is converted into a first-class N-1-seater seat.

2. Seat according to Claim 1, in which the N seat cushions (3) are at least partially demountable so as to comprise at least two demountable part seat cushions (3A).

3. Seat according to Claim 2, in which the demountable part seat cushions (3A) are arranged at the centre of the second-class N-seater seat that can be converted into a first-class N-1-seater seat.

4. Seat according to Claim 2, in which the demountable part seat cushions (3A) are arranged at the end of the second-class N-seater seat that can be converted into a first-class N-1-seater seat.

5. Seat according to any one of Claims 1 to 4, in which at least one seat cushion (3) is fixed.

6. Seat according to any one of Claims 1 to 5, in which the said means (5) of translating the said seat cushions (3) that are to be translated and the said armrests (4) that are to be translated are made up of a translation shaft (6) which can be rotated R and comprises a translation element (7) associated with each armrest (4) that is to be translated and each seat cushion (3) that is to be translated.

7. Seat according to any one of Claims 1 to 6, in which the said translation elements (7) for the said armrests (4) and the said seat cushions (3) that are to be translated are made up of variable-pitch screws of which the screw pitch and length of the active region comprising the said screw thread increases with the separation between the said armrests (4) that are to be translated and the said seat cushions (3) that are to be translated with respect to the said fixed armrests (4) and seat cushions (3).

8. Seat according to any one of Claims 1 to 7, comprising a chassis (8) supporting the said translation shaft (6) and at least one shaft (9) for guiding the said armrests (4) that are to be translated and the said seat cushions (3) that are to be translated, the said translation shaft (6) and the said guide shafts (9) supporting armrest supports (10) that can move in terms of translation and seat cushion supports (11) that can move in terms of translation, the said moving armrest supports (10) that are to be translated being translated by means of the said translation elements (7) associated with each armrest that is to be translated, and the said moving seat cushion supports (11) that are to be translated being translated by means of the said translation elements (7) associated with each seat cushion that is to be translated.

9. Seat according to any one of Claims 1 to 8, in which the screw threads of the said translation elements (7) are either left-hand threads in the case of some of these translation elements (7) or right-hand threads in the case of the other translation elements (7), and depend on the translation T that is to be achieved.

10. Seat according to any one of Claims 1 to 9, **characterized in that** N is equal to 2.

11. Method of converting a convertible second-class N-seater seat (1) into a first-class N-1-seater seat and vice versa, the said second-class N-seater seat having N seats (2) with N seat cushions (3) and N+1 armrests (4, 4A), the said method comprising steps allowing:
- the said convertible second-class N-seater seat (1) to be converted into a first-class N-1-seater seat, and vice versa,
- at least one of the two seat cushions (3) and at least one of the armrests (4) to be translated by means of translation means (5) incorporated into the second-class N-seater seat (1) that can be converted into a first-class N-1-seater seat, the seat cushions (3) and the armrests (4) remaining mutually aligned,
**characterized in that** the method comprises a step allowing an intermediate armrest (4A) between two seats (2) to be removed when the second-class M-seater seat is converted into a first-class N-1-seater seat, or an intermediate armrest (4A) to be inserted between two seats (2) when the first-class N-1-seater seat is converted into a second-class M-seater seat.

12. Method according to Claim 11, comprising a step which consists in the fact that at least one demountable part seat cushion (3A) is removed from the seat when the second-class N-seater seat is converted into a first-class N-1-seater seat then refitted when the first-class N-1-seater seat is converted into a second-class N-seater seat.

13. Method according to either one of Claims 11 and 12, comprising a step which consists in rotating R a translation shaft (6) incorporated in the said means (5) of translating the said seat cushions (3) that are to be translated and the said armrests (4) that are to be translated, by means of translation elements (7) associated with each armrest (4) that is to be translated and each seat cushion (3) that is to be translated.

14. Method according to any one of Claims 11 to 13, comprising a step consisting in translating moving armrest supports (10) that are to be translated, by means of the said translation elements (7) associated with each armrest that is to be translated, and in translating moving seat cushion supports (11) that are to be translated, by means of the said translation elements (7) associated with each seat cushion that is to be translated.

15. Method according to any one of Claims 11 to 14, **characterized in that** N is equal to 2.
